# EUROPEAN PATENT APPLICATION

(11) **EP 2 239 435 A1**
(43) Date of publication of application: **13.10.2010**
(21) Application number: 09157369.1
(22) Date of filing: 06.04.2009
(51) Int. Cl.: F01P 7/16, G05D 23/00, H02K 9/19

(54) **Electrical generator and method for operating a cooling circuit of an electrical generator**

(71) Applicant: Alstom Technology Ltd, 5400 Baden (CH)
(72) Inventor: Hug, Rene, 68169 Mannheim (DE); Langenbacher, Klaus, 67366 Weingarten (DE)

(57) **Abstract**

The electrical generator (1) comprises a stator (2) and a rotor (3) housed within the stator (2). The stator (2) is provided with a cooling circuit comprising a pump (6) pumping a cooling liquid through a pipe (7) provided with a plurality of branches (9) passing through the stator (2). The cooling circuit comprises a sensor (10) for measuring the temperature of the cooling liquid connected to a control unit (11) that is connected to and drives the pump (6). When the sensor (10) measures a cooling liquid temperature higher than a prefixed temperature, the control unit (11) increases the cooling liquid flow rate to increase the heat that the cooling liquid takes up from the stator (2), and when the sensor measures a cooling liquid temperature lower than said prefixed temperature the control unit decreases the cooling liquid flow rate to decrease the heat that the cooling liquid takes up from the stator (2). The present invention also refers to a method for operating the cooling circuit of an electrical generator.

## Description

### TECHNICAL FIELD

The present invention relates to an electrical generator and a method for operating a cooling circuit of an electrical generator.

In particular, the invention refers to a stator cooling unit that is used for cooling a stator of large electrical generators for electrical power production and distribution.

### BACKGROUND OF THE INVENTION

As known in the art, during operation electrical generators generate a large amount of heat.

In order to guarantee the correct operation of the generators and their reliance, heat must be collected and taken away from the generators.

In this respect, small and medium size electrical generators are typically equipped with gas cooling systems. In gas cooling systems the inner of the generator is filled with a gas that, during operation, cools the generator and is cooled in a heat exchanger.

Nevertheless, these systems are not able to guarantee a correct operation of generators with a large electrical nominal power (> about 600 MW); the latter are thus usually provided with additional liquid cooling circuits.

Traditional additional liquid cooling circuits comprise two pumps (for the necessary redundancy) that let a liquid (typically deionised water) circulate in a pipe having a plurality of branches within the generator stator and at the bus ducts (i.e. the conductors that lead the electric power out of the generator).

In addition, traditional generators also have heat exchangers where the liquid coming from the generator is cooled.

During operation, the liquid is pumped at a constant velocity, i.e. with constant mass flow rate, through the pipe and thus also through the branches that passes within the generator stator and at the bus ducts.

While passing through these branches within the generator stator and at the bus ducts, the liquid collects heat and increases its temperature.

Afterwards, the liquid passes through the pumps and the heat exchanger where it is cooled; then the liquid is fed to the electric generator again.

As the liquid mass flow rate is constant, also the energy consumption of the motors that activate the pumps is constant.

Thus, if the actual power of the generator is reduced, energy consumption still is the same as in full power operation.

In other words, if the electrical generator operates at part load (instead of full load), energy consumption of the motors activating the pumps is the same as that of full load.

This reduces the theoretical power factor of the generator's part-load, and enlarges the operating costs of the plant.

### SUMMARY OF THE INVENTION

The technical aim of the present invention is therefore to provide an electrical generator and a method by which the said problems of the known art are eliminated.

Within the scope of this technical aim, an object of the invention is to provide an electrical generator and a method by which the theoretical power factor of the generator's part-load is increased.

Another object of the invention is to provide an electrical generator and a method by which the operating costs of the plant are reduced.

### BRIEF DESCRIPTION OF THE DRAWINGS

Further characteristics and advantages of the invention will be more apparent from the description of a preferred but non-exclusive embodiment of the electrical generator and method according to the invention, illustrated by way of non-limiting example in the accompanying drawings, in which:

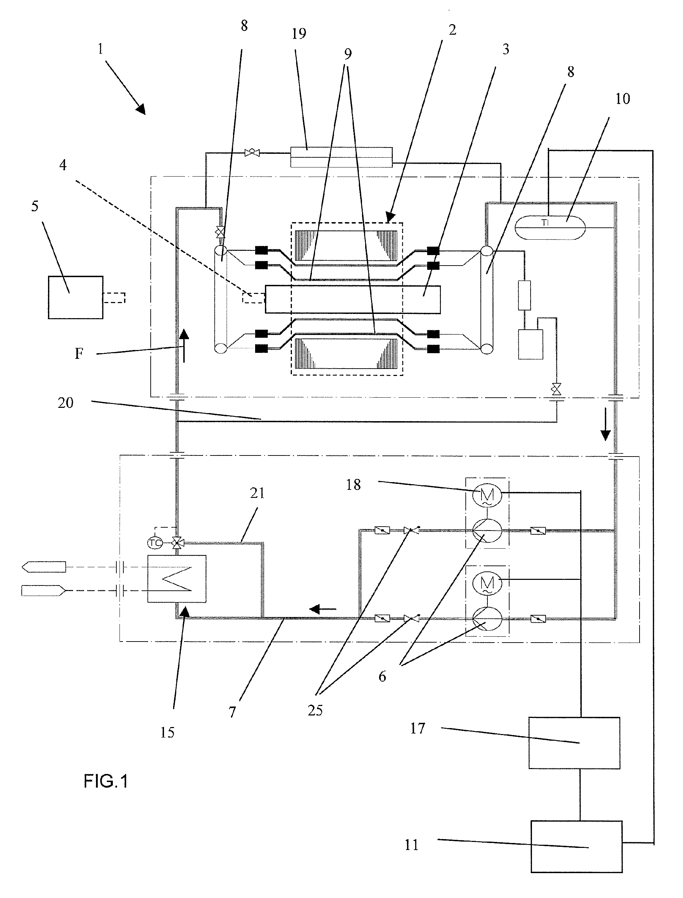

Figure 1 is a schematic view of an electrical generator according to the invention: and

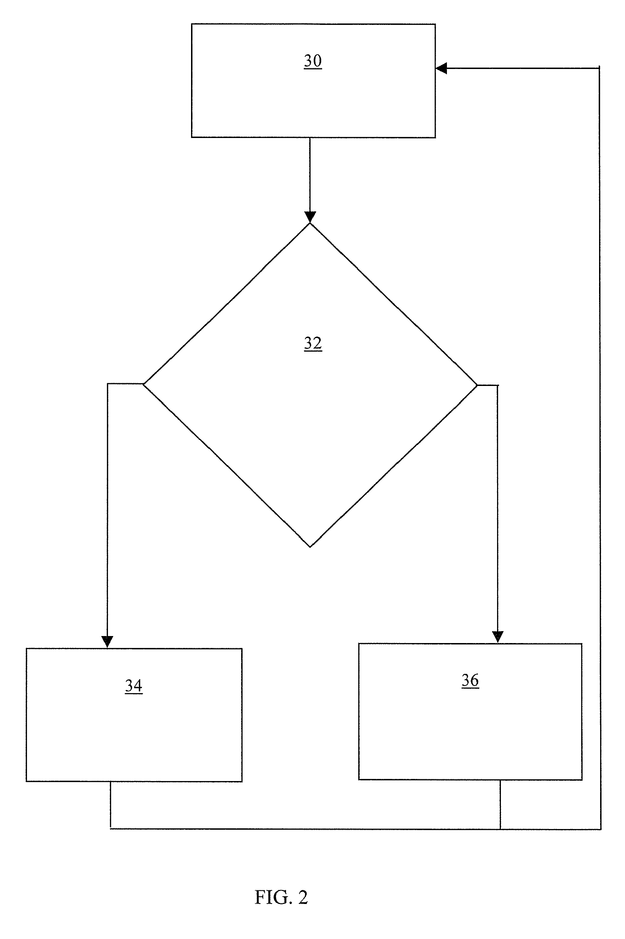

Figure 2 is a flow chart showing the steps of the method of the invention.

### DETAILED DESCRIPTION OF THE INVENTION

With reference to the figures, these show an electrical generator 1 comprising a stator 2 and a rotor 3 housed within the stator 2.

The rotor 3 is connected to a shaft 4 of a motor 5, for example a gas or steam turbine.

The stator 2 is provided with a cooling circuit comprising two pumps 6; two pumps guarantee the necessary redundancy, in different embodiments also one or more than two pumps may be used.

The pumps 6 are connected in parallel with each other and the branches of circuit to which they are connected have valves 25 that let the pumps 6 be independently operated, such that they may be both open, both closed, or one open and the other closed.

The pumps 6 are connected to a pipe 7 and pump a cooling liquid (typically demineralised water) through it.

The pipe 7 is connected to a first and second manifold 8; between the two manifolds 8 a plurality of branches 9 passing through the stator 2 are provided; typically the branches 9 are housed in the hollow bars in the generator stator.

The cooling circuit further comprises a sensor 10 for measuring the temperature of the cooling liquid.

The sensor 10 is connected to a control unit 11, which is connected to and drives the pumps 6, such that when the sensor 10 measures a cooling liquid temperature higher than a prefixed temperature, the control unit 11 increases the cooling liquid flow rate and when the sensor measures a cooling liquid temperature lower than the prefixed temperature the control unit 11 decreases the cooling liquid flow rate.

The pipe 7 defines with the branches 9 a closed cooling circuit.

The closed cooling circuit defined by the pipe 7 and branches 9 also comprises a heat exchanger 15.

Advantageously, the sensor 10 is downstream of the stator 2, the pumps 6 are downstream of the sensor 10 and the heat exchanger 15 is downstream of the pumps 6.

In a different embodiment (not shown) the sensor 10 is downstream of the stator 2, the heat exchanger 15 is downstream of the sensor 10 and the pumps 6 are downstream of the heat exchanger 15.

The control unit 11 comprises a PLC or a PC or a different programmable electronic device that is connected to a frequency converter 17 that drives the motors 18 which activate the pumps 6.

The motors 18 are three phase asynchronous motors or three phase synchronous motors.

In addition, the cooling circuit is also provided with a degassing tank 19 connected in parallel with the branches 9 of the generator stator, a first bypass 20 bypassing the branches 9 to cool the generators bus ducts, and a second bypass 21 bypassing only the heat exchanger 15.

In particular, the first bypass 20 has a first end connected upstream of the stator 2 and a second end connected downstream of the stator 2; moreover the second end is connected upstream of the sensor (10).

The operation of the generator of the invention is apparent from that described and illustrated and is substantially the following.

During operation the cooling liquid (deionised water) is pumped by the pumps 6 in the pipe 7.

In this respect, the cooling liquid coming out from the generator passes through the pipe 7 and goes towards the pumps 6 (in the direction of the arrows F).

Then the cooling liquid is pumped by the pumps 6 such that it passes through the heat exchanger 15 where it is cooled and enters the first manifold 8.

From the first manifold 8 the cooling liquid passes through the branches 9 where it cools the stator and increases its temperature; afterwards it enters the second manifold 8.

The first bypass 20 leads the cooling liquid to the generators bus ducts, where it cools the bus ducts and increases its temperature; afterwards the cooling liquid enters the second manifold 8.

From the second manifold 8 the cooling liquid enters the pipe 7 and is directed again towards the pumps 6.

When the liquid goes out from the stator 2 (i.e. when it goes out from the second manifold 8) the sensor 10 measures its temperature and communicates it to the control unit 11.

The amount of heat produced by the generator depends on the present power output of the generator, thus in part load operation this amount of heat is lower than in full load operation. This leads to different temperatures of the generator during operation and thus to different temperatures of the cooling liquid.

The control unit 11 compares the measured temperature with a prefixed temperature stored in its memory.

If the measured temperature is greater than the prefixed temperature, the control unit 11 drives the frequency converter 17 such that it increases the frequency of the electric power fed to the motors 18.

As the frequency of the electric power fed to the motors 18 is increased, the motors 18 increase their velocity and thus the mass flow rate of the cooling liquid (demineralised water) circulating within the pipe 7, the branches 9 and at the bus ducts.

An increased mass flow rate of the cooling water increases the heat taken away by the liquid; i.e. the heat taken away by the liquid increases and the temperature of the stator decreases.

In the same way, if the measured temperature of the cooling liquid is lower than the prefixed temperature, the control unit 11 decreases the cooling liquid flow and, in this respect, it drives the frequency converter 17 such that it decreases the frequency of the electric power fed to the motors 18.

So, the generator outlet temperature of the cooling liquid (demineralised water) is controlled to a fix level and therefore also the temperature of the generator is controlled to a prefixed level independently of the load conditions of the generator (i.e. part load, or full load or other load conditions).

Advantageously, the generator of the invention has the possibility to use flow-optimised components in the water cooling circuit to save an additional amount of energy, even by later plant revisions, so, the power plant operator is not dependent on state of the art at the moment of building the power plant, but can easily profit from later developments, e.g. in flow optimisation.

In fact, during operation the plant is able to auto-regulate the mass flow rate, in order to keep the temperature of the cooling liquid (and thus the temperature of the stator) close to the prefixed value, independently of the pressure drops within the pipe 7, branches 9 and the bus ducts.

Furthermore, the power plant operator has more flexibility to react to unforeseen operating conditions, as for example break down from one of the pumps.

The present invention also relates to method for operating a cooling circuit of the electrical generator.

The method comprises the steps of measuring 30 the temperature of the cooling liquid flowing through the cooling circuit, comparing 32 the measured temperature with a prefixed temperature, if the measured temperature is greater than the prefixed temperature, increasing 34 the cooling liquid flow rate within the cooling circuit to increase the heat that the cooling liquid takes up from the stator and, if the measured temperature is lower than the prefixed temperature, decreasing 36 the cooling liquid flow within the cooling circuit to decrease the heat that the cooling liquid takes up from the stator.

Advantageously, the cooling liquid flow is increased or decreased by increasing or decreasing the frequency of the electrical power activating the motors operating the pumps.

Moreover, the cooling circuit may also comprise a bypass 20 for cooling the generators bus ducts.

The generator and the method conceived in this manner are susceptible to numerous modifications and variants, all falling within the scope of the inventive concept; moreover all details can be replaced by technically equivalent elements.

In practice the materials used and the dimensions can be chosen at will according to requirements and to the state of the art.

### REFERENCE NUMBERS

1 electrical generator
2 stator
3 rotor
4 shaft
5 motor activating the generator
6 pump
7 pipe
8 manifold
9 branches within the stator
10 sensor
11 control unit
15 heat exchanger
17 frequency converter
18 motor of the pump 6
19 degassing tank
20 first by pass
21 second by pass
25 valves
30, 32, 34, 36 steps of the method
F cooling liquid flow

## Claims

1. Electrical generator (1) comprising a stator (2) and a rotor (3) housed within said stator (2), wherein said stator (2) is provided with a cooling circuit comprising a pump (6) pumping a cooling liquid through a pipe (7) provided with at least one branch (9) passing through said stator (2), **characterised in that** said cooling circuit further comprises a sensor (10) for measuring the temperature of the cooling liquid connected to a control unit (11) which is connected to and drives said pump (6), such that when the sensor (10) measures a cooling liquid temperature higher than a prefixed temperature the control unit (11) increases the cooling liquid flow rate to increase the heat that the cooling liquid takes up from the stator (2), and when the sensor measures a cooling liquid temperature lower than said prefixed temperature the control unit decreases the cooling liquid flow rate to decrease the heat that the cooling liquid takes up from the stator (2).

2. Electrical generator as claimed in claim 1, **characterised in that** said pipe (7) defines with the branches (9) a closed cooling circuit also comprising a heat exchanger (15).

3. Electrical generator as claimed in claim 2, **characterised in that** said sensor (10) is downstream of said stator (2), said pump (6) is downstream of said sensor (10) and said heat exchanger (15) is downstream of said pump (6).

4. Electrical generator as claimed in claim 2, **characterised in that** said sensor (10) is downstream of said stator (2), said heat exchanger (15) is downstream of said sensor (10) and said pump (6) is downstream of said heat exchanger (15).

5. Electrical generator as claimed in claim 1, **characterised in that** said control unit (11) comprises a PLC or a PC or different programmable electronic device.

6. Electrical generator as claimed in claim 1, **characterised in that** said control unit is connected to a frequency converter that drives a motor, which activates said pump.

7. Electrical generator as claimed in claim 6, **characterised in that** said motor is a three phase asynchronous motor or three phase synchronous motors.

8. Electrical generator as claimed in claim 1, **characterised in that** the pump (6) increases or decreases the mass liquid flow rate.

9. Electrical generator as claimed in claim 1, **characterised in that** said cooling circuit comprises a bypass (20) for cooling the generators bus ducts.

10. Electrical generator as claimed in claim 9, **characterised in that** said bypass (20) has a first end connected upstream of the stator (2) and a second end connected downstream of the stator (2), said second end being connected upstream of the sensor (10).

11. Method for operating a cooling circuit of an electrical generator (1) comprising a stator (2) and a rotor (3) housed within said stator (2) and wherein the stator (2) is provided with a cooling circuit comprising a pump (6) pumping a cooling liquid through a pipe (7) provided with at least one branch (9) passing through said stator (2) and a sensor (10) for measuring the temperature of the cooling liquid connected to a control unit (11) which is connected and drives said pump (6), the method comprising the steps of:
- measuring (30) the temperature of the cooling liquid flowing through the cooling circuit,
- comparing (32) the measured temperature with a prefixed temperature,
- if the measured temperature is greater than the prefixed temperature, increasing (34) the cooling liquid flow rate within the cooling circuit to increase the heat that the cooling liquid takes up from the stator (2), and
- if the measured temperature is lower than the prefixed temperature, decreasing (36) the cooling liquid flow rate within the cooling circuit to decrease the heat that the cooling liquid takes up from the stator (2).

12. Method as claimed in claim 11, **characterised in that** the cooling liquid flow is increased or decreased by increasing or decreasing the frequency of the electrical power activating the motor (18) operating the pump (6).

13. Method as claimed in claim 11, **characterised in that** said cooling circuit comprises a bypass (20) for cooling the generators bus ducts.

14. Method as claimed in claim 12, **characterised in that** the motor is a three phase asynchronous motor or three phase synchronous motors.

15. Method as claimed in claim 11, **characterised in that** the pump (6) increases or decreases the mass liquid flow rate.
